# DEMANDE DE BREVET EUROPEEN

(11) **EP 0 658 060 A1**
(43) Date de publication de la demande: **14.06.1995**
(21) Numéro de dépôt: 94402777.0
(22) Date de dépôt: 05.12.1994
(51) Int. Cl.: H04Q 1/46

(54) **Détecteur de signal de tonalité basse-fréquence téléphonique**

(30) Priorité: 09.12.1993 FR 9314797
(71) Demandeur: ALCATEL BUSINESS SYSTEMS, F-75008 Paris (FR)
(72) Inventeur: Humen, Laurent, F-95110 Sannois (FR); Dupaquier, Daniel, F-93200 Saint Denis (FR); El Hage, Jaoudat, F-95600 Eaubonne (FR)
(74) Mandataire: Schaub, Bernard

(57) **Abrégé**

Détecteur de signal de tonalité téléphonique de basse-fréquence (f0) à gabarit de détection défini. Il comporte une unité (B) ayant des moyens (5, 6, 8, 9) pour détecter la présence de la fréquence de tonalité recherchée et pour produire une première tension continue représentative du niveau du signal après filtrage et des unités (D, E, F) ayant des moyens (13, 15, 29) pour produire des tensions continues représentatives du signal analogique reçu et des moyens (7, 17, 27) pour vérifier que le signal analogique reçu respecte les critères fixés par le gabarit.

## Description

La présente invention se rapporte à un détecteur de signal de tonalité basse-fréquence téléphonique, notamment pour installation privée de téléphonie numérique susceptible de recevoir diverses tonalités aux quelles des fonctions sont affectées.

Comme il est connu, en téléphonie, une détection de tonalité est spécifiée selon un gabarit. Un exemple de gabarit pour une fréquence de tonalité ici référencée f0 définit une zone de fonctionnement obligatoire des détecteurs dans laquelle toute fréquence qui est comprise entre deux valeurs fO-f1 et fO+f1 fréquentiellement équidistantes de la fréquence de tonalité fO et qui est d'amplitude supérieure à une valeur minimale A1 doit être détectée. Autour de cette zone est spécifiée une zone pour laquelle aucune fréquence ne doit être détectée; cette zone est fréquentiellement extérieure à une bande de fréquences qui est délimitée par deux autres valeurs fO-f2 et fO+f2, la valeur f2 étant supérieure à f1, et elle est limitée en amplitudes à une valeur maximale A3 qui est inférieure à la valeur A1 précitée. Il est aussi spécifié que le détecteur de fréquences ne doit pas fonctionner pour des signaux d'entrée dépassant un certain niveau A0.

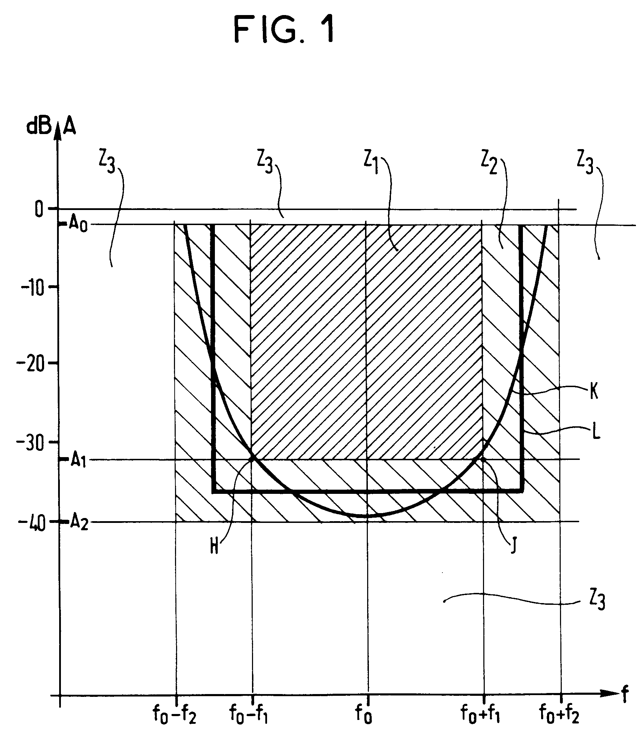

Un gabarit de ce type est donné sur le diagramme amplitude/fréquence qui est reproduit sur la figure 1 jointe .

Sur ce diagramme apparaît une première zone Z1, fortement hachurée, qui est celle dans laquelle le signal de tonalité, à fréquence sensiblement égale à fO, doit impérativement être détecté.

Si par exemple la tonalité à détecter correspond à une fréquence téléphonique fO de 500 Hertz, toute fréquence comprise dans une bande de fréquences allant de fO-f1 à fO+f1 doit être détectée.

Si par exemple la fréquence de première tolérance f1 est de 15 Hertz, on doit impérativement détecter toute fréquence comprise entre 485 et 515 Hertz.

Il existe aussi une condition d'amplitude, et le diagramme montre que l'on doit impérativement détecter toute tonalité qui, en outre, est d'amplitude supérieure à une valeur minimale A1 par exemple égale à -32 dB, mais inférieure à une valeur maximale A0, par exemple -2 dB.

Autour de cette zone de détection obligatoire Z1 est définie une zone de tolérance Z2, faiblement hachurée sur le diagramme, pour laquelle la tonalité peut ou non être détectée à la rigueur. Du point de vue fréquentiel, cette zone Z2 est limitée par les fréquences fO+f2 et fO-f2, f2 ayant par exemple une valeur de 25 Hertz. Elle est limitée en amplitude supérieure par la valeur A0 précitée, et en amplitude inférieure par une valeur A2 inférieure à A1. Par exemple, A2 a une valeur de - 40 dB.

Autour de ces zones Z1 et Z2 est définie une zone interdite Z3, non hachurée sur le diagramme, dans laquelle le détecteur ne doit impérativement rien détecter.

On connaît des détecteurs de tonalité téléphonique basse-fréquence qui utilisent un filtrage fin suivi d'une détection. En raison de l'étroitesse de la zone de tolérance Z2, ces dispositifs nécessitent l'utilisation de filtres du sixième ou du huitième ordre, particulièrement onéreux et de mise en oeuvre délicate.

Une autre solution connue consiste à utiliser des filtres moins performants et à procéder par comptage d'impulsions.

Ce procédé est d'une part assez peu fiable, et il peut d'autre part nécessiter un filtrage des bruits hors-bande dans certains cas d'utilisation, car on risque alors d'obtenir des détections parasites sur des fréquences multiples de celle à détecter.

Un autre inconvénient de ces détecteurs de fréquence de tonalité connus est qu'ils sont chacun conçus pour une fréquence et des spécifications bien précises. Or, pour des raisons industrielles bien évidentes, il serait au contraire très avantageux de pouvoir utiliser un même circuit pour des fréquences différentes et des spécifications de sévérités différentes, et de n'avoir à modifier en conséquence que des valeurs de tensions et/ou qu'un faible nombre de composants, en particulier lorsque l'exportation d'un produit conduit à appliquer des spécifications différentes.

Enfin, la plupart de ces détecteurs connus possèdent une courbe de réponse K (figure 1) dont les bords sont loin d'être rectilignes comme ils le devraient, mais ont plutôt une forme de parabole renversée comme représenté.

Il en résulte en particulier que les deux points d'extrémité inférieurs H et J de la zone détection obligatoire Z1 au lieu de se trouver sur la courbe K, comme c'est le cas sur la figure 1, peuvent se trouver rejetés, à l'extérieur de cette courbe de réponse K, si celle-ci remonte, de sorte que finalement le détecteur considéré ne répond pas parfaitement aux spécifications.

L'invention vise à remédier à ces divers inconvénients.

Elle se rapporte à cet effet à un détecteur de signal de tonalité téléphonique de basse-fréquence f0 à gabarit de détection défini par une zone Z1 de détection obligée, limitée en fréquence entre des valeurs f0-f1 et f0+f1 et en amplitude entre des valeurs A1 et A0 avec A1<A0, une zone Z2 de détection tolérée, limitée en fréquence entre des valeurs f0-f2 et f0+f2, avec f2>f1 et en amplitude entre A0 et une valeur A2<A1, une zone de détection interdite extérieure à l'ensemble formé par les deux zones précitées, caractérisé en ce qu'il comporte pour la prise en compte du signal analogique reçu, soumis à détection:
- une première unité comportant des moyens pour détecter la présence de la fréquence, correspondant à la tonalité recherchée, par filtrage passe-bande centré sur cette fréquence dans la plage de détection tolérée du signal analogique reçu qui est pris en compte après calibrage, et des moyens pour produire une première tension continue représentative du niveau du signal obtenu après filtrage;
- une deuxième unité comportant des moyens pour produire une seconde tension continue représentative du niveau du signal analogique reçu et des premiers moyens déclencheurs pour produire un signal caractéristique de présence de la tonalité recherchée, si le niveau de la première tension continue est supérieur à celui de la seconde tension continue;
- une troisième unité comportant des moyens pour produire une troisième tension continue représentative du niveau du signal analogique reçu, des premiers moyens de commutation du signal caractéristique de présence fourni par la seconde unité, des seconds moyens déclencheurs pour commander passant les premiers moyens de commutation lorsque la troisième tension continue est supérieure au niveau minimal fixé et des seconds moyens de commutation insérés entre les moyens pour produire la troisième tension et les moyens déclencheurs;
- une quatrième unité comportant des moyens pour produire une quatrième tension continue représentative du niveau du signal reçu et des troisièmes moyens déclencheurs pour commander passant les seconds moyens de commutation lorsque la quatrième tension continue est inférieure au niveau maximal fixé.

L'invention sera comprise et ses avantages et caractéristiques ressortiront de la description suivante d'un exemple non limitatif de réalisation, en liaison avec le diagramme déjà décrit qui est présenté en figure 1.

La figure 1 montre donc un exemple de gabarit défini sur un diagramme amplitude/fréquence.

La figure 2 est un schéma synoptique d'un détecteur de tonalité téléphonique polyvalent.

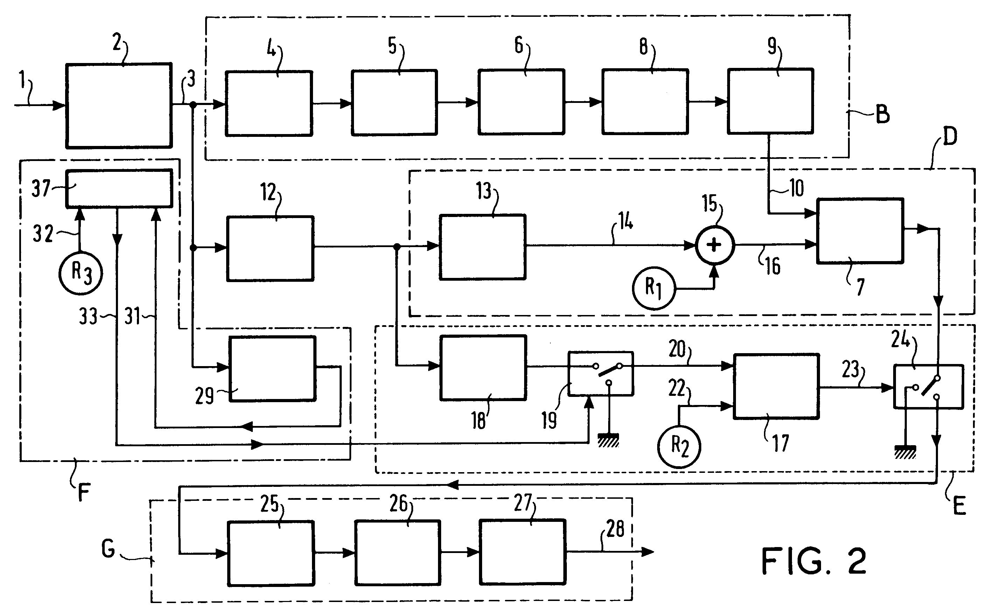

Le détecteur de tonalité téléphonique présenté figure 2 est supposé relié à une ligne téléphonique 1 dont il reçoit des signaux numériques qui sont notamment des signaux de parole et des signaux de tonalités diverses, tous numérisés, parmi ces derniers se trouve éventuellement la tonalité que l'on désire détecter, cette tonalité ayant par exemple une fréquence égale à 500 Hertz à 15 Hertz près.

Les signaux numériques reçus de la ligne téléphonique 1 sont initialement traités par un circuit cofidec classique 2 qui les transforment en un signal analogique apparaissant au niveau d'une sortie 3 de ce cofidec 2.

Un calibrateur 4 est relié à cette sortie 3 et constitue un premier élément d'une chaîne référencée B, suivant les cas, il limite ou amplifie en amplitude le niveau du signal analogique qu'il reçoit de manière à fournir un signal d'amplitude pratiquement constante en entrée d'un système de filtrage passe-bande. Ce dernier est par exemple composé de deux filtres passe-bande 5, 6, montés en cascade, qui sont centrés sur la fréquence fO correspondant à la tonalité à détecter. Ces filtres ont par exemple des coefficients de qualité Q respectivement supposés de 5 et 10.

Dans la mesure où ce système de filtrage est en fait imparfait, le signal en sortie du filtre 6 est pratiquement compris fréquentiellement soit dans la zone de fonctionnement obligatoire Z1, soit dans la zone de tolérance Z2, voire dans Z3, selon le niveau.

Ce signal est alors éventuellement amplifié dans un amplificateur basse-fréquence de réglage 8, si la spécification le rend nécessaire, puis il est transformé en une première tension continue, proportionnellement à son amplitude, dans un premier redresseur 9 assurant son redressement et un lissage, de manière connue en elle-même. Cette tension continue est destinée à être appliquée sur une première entrée 10 d'un premier comparateur 7, de type à seuil, à deux entrées.

Un amplificateur de réglage 12 reçoit aussi le signal analogique provenant de la sortie 3 du cofidec 2, il produit un signal amplifié est appliqué à un second redresseur 13 ayant, dans une seconde chaîne D qui le comporte , mêmes fonctions que le redresseur 9. Ce second redresseur fournit, par une sortie 14, une seconde tension continue représentative du signal analogique fourni par la sortie 3.

La chaîne B est réglée par rapport à la chaîne D, ou inversement, pour que la première tension continue fournie par le premier redresseur 9, en cas d'apparition effective de la tonalité f0 au niveau de la sortie 3, dans le signal analogique soit nettement supérieure à la seconde tension continue fournie par le redresseur 13 en cas de présence de bruit. La chaîne B est aussi réglée par rapport à la chaîne D pour qu'en l'absence de tonalité f0, la seconde tension continue fournie par le redresseur 13 soit supérieure ou au moins égale à la première tension fournie par le redresseur 9, par exemple si des signaux numériques de parole ou éventuellement de bruit sont transmis par la ligne 1.

Conformément à l'invention, une tension de référence R1 est ajoutée à la seconde tension continue fournie par la sortie 14 dans un additionneur 15 et le signal somme obtenu est appliqué sur une seconde entrée 16 du comparateur 7.

Si la tension présente sur l'entrée 10 du comparateur 7 est supérieure à celle présente sur l'entrée 16, le résultat de la comparaison est considéré comme positif et, par exemple, la valeur de la tension en sortie du comparateur est de +5 volts, alors qu'elle est autrement nulle au repos.

La tension de référence R1 sert à ajuster la sensibilité de la comparaison exercée par le comparateur 7, cette comparaison ayant pour rôle premier de détecter la présence effective d'une tonalité en la distinguant du bruit constitué par l'ensemble des autres fréquences.

En effet, en l'absence de tonalité fO, il peut exister des composantes parasites égales ou voisines de la fréquence f0 dans le signal reçu et de telles composantes engendrent une première tension continue en sortie de redresseur 9. Cette première tension est comparée à la seconde tension alors présente sur la sortie 14, qui est représentative du signal d'entrée, le résultat de la comparaison doit alors être négatif, c'est-à-dire que la tension sur l'entrée 16 doit nécessairement être supérieure à celle alors présente sur l'entrée 10. Ceci est obtenu par l'addition, à la tension en sortie 14 du circuit 13, de la tension de référence R1, qui doit donc être suffisamment élevée en conséquence.

En revanche, lorsque la tonalité fO est effectivement présente, il faut alors que la tension qui en résulte sur l'entrée 10 du comparateur 7 soit supérieure à celle présente sur l'entrée 16, malgré la présence de la tension de référence R1. Cette dernière doit alors être suffisamment faible pour que la tension fournie par l'additionneur 15 à l'entrée 16 du comparateur 7 soit nécessairement inférieure à celle alors présente sur l'entrée 10.

La tension de référence R1 sert par ailleurs à équarrir les flancs de la courbe de réponse du détecteur.

Au lieu d'obtenir une courbe caractéristique de réponse du filtre ayant l'allure de la courbe K de la figure 1, la tension de référence R1 permet d'obtenir une courbe mieux équarrie, et se rapprochant donc considérablement de la courbe de réponse idéale L (Figure 1), dont les flancs sont bien raides.

Tous ces résultats sont obtenus en réglant en conséquence, par le calcul d'abord puis par voie expérimentale ensuite, la valeur de la tension de référence R1 à une valeur qui se trouve finalement être inférieure ou égale à la tension qui correspondrait au minimum A1 de l'amplitude de la zone Z1 de détection obligatoire et qui, si elle est inférieure à cette valeur, ne s'écarte sensiblement pas du voisinage de celle qui correspondrait au minimum A1 de la zone de tolérance Z2. Il n'est toutefois pas possible de fixer à l'avance une valeur mathématique rigoureuse pour cette tension R1. En pratique, elle est ajustée sur le détecteur considéré afin d'obtenir, entre autres, pour ce dernier, une courbe de réponse qui se rapproche le plus possible de la courbe caractéristique de réponse idéale, à flancs bien raides, L. Le signal de sortie de l'amplificateur 12 est également appliqué à un redresseur 18 d'une troisième chaîne E associée aux chaînes B et D pour garantir que la tonalité éventuellement détectée a une amplitude qui est supérieure à la valeur minimale admissible A2. Une troisième tension continue est produite par le redresseur 18 qui fonctionnellement analogue aux redresseurs 9 et 13.

Cette troisième tension continue est susceptible d'être appliquée sur la première entrée 20 d'un deuxième comparateur à seuil 17, via un organe de commutation 19, elle est alors comparée à une seconde tension de référence R2, qui est appliquée sur une deuxième entrée 22 du comparateur 17.

Le signal de sortie du comparateur 17 est appliqué à l'entrée de commande 23 d'un organe de commutation 24 placé entre la sortie du premier comparateur 7 et un sous-ensemble G du détecteur, si la tension représentative du signal provenant de la sortie 3, sur l'entrée 20, est supérieure à la tension R2, sur l'entrée 22.

Une chaîne F est associée aux chaînes évoquées ci-dessus pour bloquer le fonctionnement du détecteur si le niveau du signal analogique provenant de la sortie 3 est supérieur au niveau maximal A0 qui est fixé par la spécification.

Dans cette chaîne F, une quatrième tension pratiquement continue est fournie par un circuit de redressement et de lissage 29, identique aux circuits 9, 13 et 18, à partir du signal analogique provenant de la sortie 3. Cette quatrième tension continue est appliquée à une première entrée 31 d'un troisième comparateur à seuil 37 recevant une troisième tension de référence R3 qui est représentative de la valeur maximale AO précitée, sur une seconde entrée 32.

Lorsque la tension présente sur l'entrée 31 est supérieure à celle sur l'entrée 32, le signal en sortie 33 du comparateur 37 commande l'organe de commutation 19 de manière à supprimer la liaison entre circuit 18 et comparateur 17 et à forcer la tension sur la première entrée 20 de ce comparateur 17 a une valeur inférieure à la valeur de la tension R2, soit par exemple ici zéro volt.

Le comparateur 17 commande alors l'organe de commutation 24 pour qu'il isole la sortie du comparateur 7 du sous-ensemble de sortie G du détecteur, ce dernier étant en conséquence rendu inactif.

Le sous-ensemble de sortie G comporte ici deux intégrateurs 25, 26 montés en série qui ont pour fonction de ne retenir comme effective qu'une tonalité se maintenant de manière continue, sans interruption. Il comporte aussi un étage de sortie proprement dit, par exemple un circuit 27 d'adaptation de la sortie 28 du détecteur au niveau TTL normalement prévu pour les circuits d'un commutateur téléphonique.

## Revendications

**1/** Détecteur de signal de tonalité téléphonique de basse-fréquence (f0) à gabarit de détection défini par une zone (Z1) de détection obligée, limitée en fréquence entre des valeurs (f0-f1) et (f0+f1) et en amplitude entre des valeurs (A1) et (A0) avec (A1)<(A0), une zone (Z2) de détection tolérée, limitée en fréquence entre des valeurs (f0-f2) et (f0+f2), avec (f2)>(f1) et en amplitude entre (A0) et une valeur (A2)<(A1), une zone de détection interdite extérieure à l'ensemble formé par les deux zones précitées, caractérisé en ce qu'il comporte pour la prise en compte du signal analogique reçu, soumis à détection:
- une première unité (B) comportant des moyens (5,6) pour détecter la présence de la fréquence (f0) de la tonalité recherchée, par filtrage passe-bande centré sur cette fréquence dans la plage de détection tolérée du signal analogique reçu, pris en compte après calibrage, et des moyens (8,9) pour produire une première tension continue représentative du niveau du signal après filtrage;
- une deuxième unité (D) comportant des moyens (13,15) pour produire une seconde tension continue représentative du signal analogique reçu et des premiers moyens déclencheurs (7) pour produire un signal caractéristique de présence de la tonalité recherchée, si le niveau de la première tension continue est supérieur à celui de la seconde tension continue ;
- une troisième unité (E) comportant des moyens (18) pour produire une troisième tension continue représentative du signal analogique reçu, des premiers moyens de commutation (24) du signal caractéristique de présence fourni par la seconde unité, des seconds moyens déclencheurs (17) pour commander passant les premiers moyens de commutation lorsque la troisième tension continue est supérieure au niveau minimal (A2) fixé et des seconds moyens de commutation (19) insérés entre les moyens (18) pour produire la troisième tension et les moyens déclencheurs (17);
- une quatrième unité (F) comportant des moyens (29) pour produire une quatrième tension continue représentative du signal analogique reçu et des troisièmes moyens déclencheurs (37) pour commander passant les seconds moyens de commutation lorsque la quatrième tension continue est inférieure au niveau maximal (A0) fixé.

**2/** Détecteur selon la revendication 1, caractérisé en ce que la première unité comporte au moins un calibrateur (4) d'entrée recevant le signal analogique, un système de filtrage (5, 6) passe-bande relié en sortie du calibrateur et centré sur la fréquence (f0) de la tonalité recherchée et un premier redresseur (9) en série avec un amplificateur de réglage (8), en aval du système de filtrage.

**3/** Détecteur selon la revendication 2, caractérisé en ce que la seconde unité (D) comportent un premier comparateur à seuil (7) recevant la première tension continue fournie par la première unité et la seconde tension continue fournie par un second redresseur (13) relié en sortie d'un additionneur (15) qui permet d'ajouter une tension déterminée de référence (R1) au signal analogique préalablement amplifié par l'intermédiaire d'un amplificateur de réglage (12).

**4/** Détecteur selon la revendication 3, caractérisé en ce que la troisième unité (E) comporte un second comparateur à seuil (17) dont la sortie commande passant un premier organe de commutation (24), connecté à la sortie du premier comparateur, lorsque la tension fournie par un troisième redresseur (18) à une première entrée (20) de ce second comparateur à partir du signal analogique reçu, via l'amplificateur de réglage (12), est supérieure à une tension de référence (R2) appliquée à une seconde entrée (22) de ce second comparateur.

**5/** Détecteur selon la revendication 4, caractérisé en ce que la quatrième unité (F) comporte un troisième comparateur à seuil (37) dont la sortie commande passant un second organe de commutation (19), connecté entre la sortie du troisième redresseur (18) et la première entrée du second comparateur (17) dans la seconde unité, lorsque la tension fournie par un quatrième redresseur (29) à partir du signal analogique reçu est supérieure une tension de référence (R3).
